## Europäisches Patentamt
## European Patent Office
## Office européen des brevets

(19)

(11) Veröffentlichungsnummer : **0 076 412**
**B1**

(12)

# EUROPÄISCHE PATENTSCHRIFT

(45) Veröffentlichungstag der Patentschrift :
30.12.86

(51) Int. Cl.⁴ : **B 29 D 30/08**

(21) Anmeldenummer : 82108618.8

(22) Anmeldetag : 18.09.82

(54) **Fahrzeugreifen.**

(30) Priorität : 02.10.81 DE 3139305

(43) Veröffentlichungstag der Anmeldung :
13.04.83 Patentblatt 83/15

(45) Bekanntmachung des Hinweises auf die Patenterteilung : 30.12.86 Patentblatt 86/52

(84) Benannte Vertragsstaaten :
DE FR GB IT

(56) Entgegenhaltungen :
FR-A- 2 220 378
GB-A- 1 119 753
US-A- 3 218 209
US-A- 3 888 291
US-A- 3 975 490
US-A- 4 106 888
US-A- 4 140 165

(73) Patentinhaber : BAYER AG
Konzernverwaltung RP Patentabteilung
D-5090 Leverkusen 1 Bayerwerk (DE)

(72) Erfinder : Knipp, Ulrich, Dr.
Haberlandstrasse 3
D-5060 Bergisch Gladbach 2 (DE)
Erfinder : Wirtz, Hans, Dr.
Am Thelenhof 17
D-5090 Leverkusen (DE)
Erfinder : Boden, Heinrich
Sperberweg 14
D-5090 Leverkusen 3 (DE)
Erfinder : Just, Gerhard, Ing. grad.
Finkenweg 2
D-5653 Leichlingen (DE)
Erfinder : Sahler, Gerd
Engstenberg Nr. E 31
D-5090 Leverkusen (DE)

## Beschreibung

Die Erfindung betrifft einen Fahrzeugreifen aus Chemiewerkstoffen, vorzugsweise PUR-Elastomeren, bestehend aus einem Verbund von vorgefertigter armierter Lauffläche und weiteren vorgefertigten Bauteilen.

Die Herstellung von Kunststoffreifen auf Polyurethan-Basis ist in verschiedenen Schriften vorbeschrieben worden. Ausschlaggebend für den Wunsch, Polyurethanreaktionswerkstoffe einzusetzen, ist die hohe Verschleißfestigkeit einerseits und ein einfach anzuwendendes Gießverfahren andererseits.

Es ist jedoch festzustellen, daß die verschiedenen Vorschläge PUR-Reifen herzustellen, wirtschaftlich noch nicht genutzt werden konnten, weil die Eigenschaften bzw. die Herstellungsverfahren und die Kosten es nicht erlaubten, eine den konventionellen Gummireifen überlegenere Lösung zu bieten. Besondere Schwierigkeiten bereitet die Kernformgebung.

In dem US-PS-3 924 982 wird der Polyurethan-Reifen im Schleuderverfahren hergestellt und die Innenformgebung durch einen aufblasbaren Balg realisiert. Leider erlauben solche elastomeren Bälge nicht die erforderliche exakte Dimensionshaltung, welche andererseits für die gewünschte hohe Gleichförmigkeit unerläßlich ist.

Es wurde auch in der US-PS-3 994 650 vorgeschlagen, geteilte metallische Kerne einzusetzen, jedoch ist der Aufwand sehr groß und die erforderliche Beheizung des Kernes ist schwierig.

In der DE-OS-2 825 340 wurde der Vorschlag unterbreitet, die Kernformgebung durch eine dehnbare Membran zu realisieren. Dieses Verfahren ist abhängig von dem Erinnerungsvermögen der vulkanisierten Gummimembran und erlaubt keine exakte Kernformgebung. Darüber hinaus ist es nicht möglich, nach diesem Verfahren eine andere Lauffläche als eine solche ohne jegliches Profil blasenfrei herzustellen.

In der DE-PS-872 398 wurde erstmals die Verwendung von Polyurethan für Reifenkörper erwähnt, jedoch wurde hier genauso wenig wie in der US-PS-2 902 072 ein Hinweis gegeben, wie diese Polyurethan-Reifen sinnvoll, d. h. wirtschaftlich, hergestellt werden können.

In der US-PS-3 208 500 wurde vorgeschlagen, die Reifen in Form von zwei Reifenhälften herzustellen und anschließend durch Reibungsverschweißung miteinander zu verbinden. Es zeigte sich jedoch, daß solche Reifen, hergestellt aus nur einem einzigen Material, den praktischen Anforderungen nicht genügen. Für die Reifenlauffläche werden sehr abriebfeste und rutschfeste Elastomere verlangt, während die Anforderungen an die Seitenwand unterschiedlich sind : sie soll elastisch sein, aber sich nicht unter Zugbeanspruchung dehnen. Insbesondere wurde bei diesen Konstruktionen beobachtet, daß die resultierenden Reifen aus thermoplastischen Polyurethan-Elastomeren einen kalten Fluß aufwiesen, wodurch eine Dimensionshaltung nicht gewährleistet war.

Man hat versucht, diese Idee der sauberen Herstellung der beiden Reifenhälften aufzugreifen und statt der Verschweißung eine Fingerung gemäß US-PS-4 140 165 in mehreren Etagen durchzuführen. Der Reifen ist dabei aus einer Vielzahl von Armierungen und Elastomer-Lagen hergestellt und anschließend zusammenvulkanisiert.

Die in der DE-OS-2 729 061 vorgestellte Lösung erlaubt zwar die einfache Herstellung der beiden Reifenwände und die Verklammerung durch den armierten Gürtel, jedoch mußte festgestellt werden, daß der nicht mit dem Gürtel fest verbundene Karkassenteil beim Abrollen eine Relativ-Bewegung aufweist und daß bei einem Defekt der Reifen leicht auseinandergeht.

Die in den US-PSen-4 106 888 und 4 160 007 beschriebenen Reifen haben dank ihrer konkaven Seitenwandausbildung auch bei stärkerem Innendruck im Bereich der Seitenwand keine Zugbeanspruchung und können daher ohne Armierung in der Seitenwand hergestellt werden. Diese Konstruktionen wurden vorgeschlagen für Kautschuk-Elastomere unter Anwendung der dort üblichen Spritzguß-Preßtechnologien.

Wegen der sehr schwierigen Herstellung solcher Formteile im Spritzgußverfahren bzw. im Transfermoulding-Verfahren, wo eine sehr saubere Abstimmung der Dosierung der Laufflächenmischung einerseits und der Karkassenmischung in die beiden Seitenwänden andererseits vorgenommen werden muß und wo zum anderen nur mehrfach geteilte Stahlkerne aus Stabilitätsgründen angewendet werden können, welche wiederum schwer zu temperieren sind, konnte dieses Verfahren nicht wirtschaftlich betrieben werden.

Weiterhin muß als nachteilig bei diesem Verfahren angesehen werden, daß solche Reifenkonstruktionen nicht mit konventionellen Felgen kombiniert werden können, wodurch die breite Anwendung zusätzlich erschwert ist (nach dem praktizierbaren Verfahren kann der konventionelle Wulstdraht nicht exakt eingebettet werden).

In der GB-PS-1 119 753 wird ein Schlauchreifen beansprucht, bei dem am größeren umlaufenden Rand der mit Verstärkung versehenen und nach außen gebogenen Seitenwand ein nach innen vorkragender Flansch angebracht ist, der über eine Verzahnung bzw. Adhäsionsmittel mit einer verstärkten Lauffläche verbunden ist. Der Nachteil dieses Reifens besteht darin, daß die Lauffläche in der Mitte, wo das größte Biegemoment auftritt, den kleinsten Querschnitt besitzt, so daß an dieser Stelle infolge der Durchbiegung zuerst mit Werkstoffschäden zu rechnen ist.

Aufgabe der Erfindung ist es, die vorbeschriebenen Nachteile zu vermeiden.

Die Aufgabe wird erfindungsgemäß dadurch gelöst, daß als Bauteile konkave Seitenwände verwendet werden, deren nach außen zeigende Enden am inneren Randbereich der Lauffläche durch Reibungsschweißnähte fest mit dieser verbunden sind.

Diese Konstruktion erlaubt betriebssichere Fahrzeugreifen herzustellen, da die Reibungsschweißnähte an festigkeitsmäßig günstiger Stelle liegen. Darüber hinaus kann die Werkstoffwahl für die einzelnen Bauteile nach den spezifischen Anforderungen erfolgen.

So kann beispielsweise für die Lauffläche ein reibfestes Material und für die Seitenwände ein in Bezug auf Biegung günstiger Werkstoff eingesetzt werden. Ein weiterer Vorteil besteht darin, daß jedes Bauteil für sich sicher vorgefertigt werden kann. Auch wird die Weiterverarbeitung dadurch erleichtert, daß ein Kern, wie er zum Beispiel beim Gießen verwendet werden muß, nicht erforderlich ist.

Dieser Verzicht auf Kernwerkzeuge wirkt sich besonders vorteilhaft bei konkav geformten Seitenwänden aus, die sich ja bekanntlich durch besondere Notlaufeigenschaften beim Entweichen des Drucks auszeichnen.

Es wurde ferner gefunden, daß die Reibverschweißung auch mit solchen Polyurethan-Elastomeren realisierbar ist, welche nicht als thermoplastisch gelten. Genannt seien hier PU-Elastomere auf Basis von TDI und/oder MDI, linearen Polyestern und Polyäthern und als Kettenverlängerer Amine, wie beispielsweise solche auf Basis von Diaminobenzoesäureestern und/oder Alkyldiaminen. (Für die Herstellung sogenannter thermoplastischer Polyurethanelastomere werden nämlich üblicherweise als Kettenverlängerer Glykole eingesetzt).

In einer besonderen Ausführungsform ist die Reibungsschweißnaht luftdicht.

Durch die luftdichte Ausführung ist es möglich, bei geschlossener Seitenwand das Federvermögen des Fahrzeugreifens durch Druckluft entsprechend den Anforderungen einzustellen.

In einer weiteren Ausführungsform ist die Reibungsschweißnaht rotationssymmetrisch mit zur Achse geneigten konischen Flächen ausgebildet.

Durch die konische Form der beiden gegenüberliegenden Reibflächen ist es möglich, durch axiale Verschiebung eine saubere Reibungsverschweißung vorzunehmen.

In einer anderen Ausführungsform verläuft die rotationssymmetrisch ausgebildete Reibschweißnaht in der axialen Ebene kurvenförmig.

Durch konkave und konvexe bzw. vieleckige Formen kann eine Reibungsschweißnaht ausgebildet werden, die durch vergrößerte Fläche und gewisse Formschlüssigkeit hohe Sicherheit aufweist.

In einer möglichen Ausführungsform ist die Reibungsschweißnaht außen bündig mit Lauffläche und Seitenwand.

Durch die mit der Lauffläche bündige Seitenwand kann sich dort kein Schmutz festsetzen, der eventuell die Unwucht des Reifens vergrößert.

In einer verbesserten Ausführungsform verläuft die Reibungsschweißnaht mindestens teilweise zu dem Rand der Lauffläche versetzt.

Bei schwerer Beanspruchung ist es vorteilhaft, die Lauffläche vorspringen zu lassen, um eine Beschädigung der nicht armierten Seitenwände besonders im Bereich der Reibungsschweißnaht zu vermeiden. Auch ist denkbar, daß die Seitenwand mit Rippen versehen ist, die dann unmittelbar mit der Lauffläche verbunden werden.

In einer möglichen Ausführungsform ist die Lauffläche mit mindestens teilweise untereinander verbundenen Seitenwänden durch die Reibungsschweißnähte verschweißt.

Bei gegenseitiger Abstützung wird der Reifen besonders beim Notlauf stabiler. Andererseits ist es denkbar, auch die Seitenwände mittels eines durchgehenden Fußes zu verbinden, wodurch eventuell Kerndrähte im Bereich des Felgenhorns eingespart werden und gleichzeitig der Fahrzeugreifen direkt als schlauchloser Reifen eingesetzt werden kann.

In einer bevorzugten Ausführungsform sind durch die Reibungsschweißnähte massive und/oder integralschaumartige Polyurethane verbunden.

Durch die Wahl verschiedener Polyurethane ist ein weiter Bereich der Anforderungen an einen Fahrzeugreifen optimal abzudecken.

Die Lauffläche kann vorzugsweise aus aminvernetzten oder wasservernetzten Polyurethan-Elastomeren bestehen, welche durch Armierungen auf der Basis von Stahl, Polyester, Polyamid oder Aramid-Basis verstärkt sind und welche gegebenenfalls noch eine zusätzliche Laufflächenschicht aus verschleißfestem und rutschfestem Gummi besitzt.

Die Seitenwände bestehen vorzugsweise aus einem im Gießverfahren hergestellten PU-Elastomer oder aus einem Polyurethan-Integralschaum.

In einer Ausführungsform besteht bei der Verbindung durch die Reibungsschweißnaht mindestens ein Bauteil aus einem Thermoplast.

Überraschenderweise konnte festgestellt werden, daß für die Seitenwand auch thermoplastische Kunststoffe auf Basis von Nylon 6, wie z. B. Terephthalsäure-Polyester-Kunststoffen und EPDM-modifizierten Polyolefinen, verwendet werden können, welche auch mit den genannten PU-Elastomeren im Reibungsschweißverfahren eine hervorragende Haftung ergeben.

Beispiele der Erfindung sind in den Zeichnungen dargestellt und werden im folgenden näher erläutert.

Es zeigen :

Figur 1  Schnitt durch Fahrzeugreifen mit konischer Reibungsschweißnaht

Figur 2  Schnitt durch Fahrzeugreifen mit konischer Reibungsschweißnaht und verrippter Seitenwand

Figur 3  Seitenansicht eines Fahrzeugreifens mit konischer Reibungsschweißnaht und verrippter Seitenwand

Figur 4  Schnitt durch Fahrzeugreifen mit konischer Reibungsschweißnaht und versetzter Seitenwand

Figur 5 Schnitt durch Fahrzeugreifen mit balliger Reibungsschweißnaht

Figur 6 Schnitt durch Fahrzeugreifen mit vieleckiger Reibungsschweißnaht

Figur 7 Schnitt durch Fahrzeugreifen mit konischer Reibungsschweißnaht und durchgehendem Fuß

Figur 8 Schnitt durch Fahrzeugreifen mit balliger Reibungsschweißnaht und Gummilauffläche

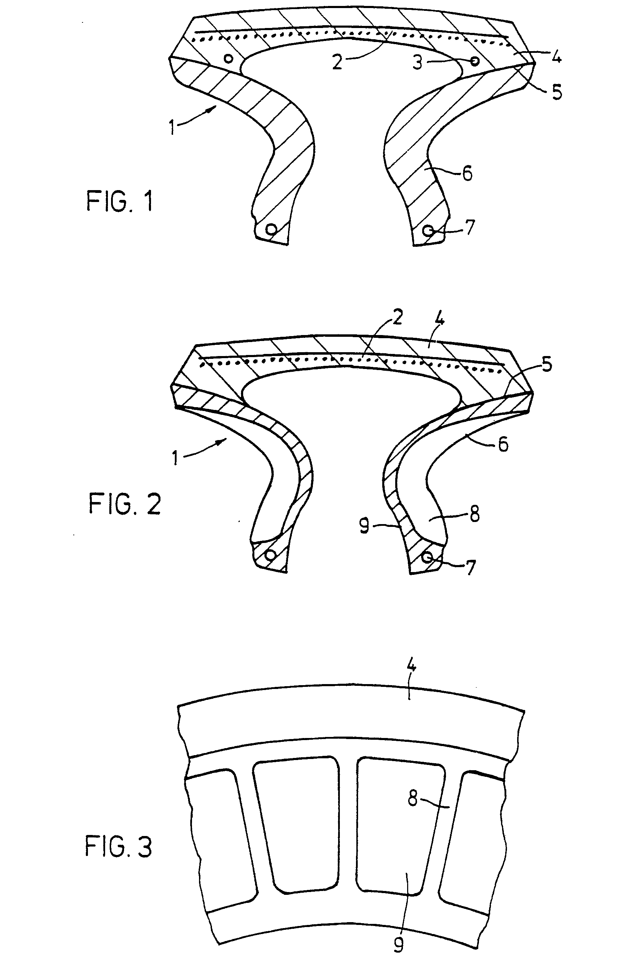

In Fig. 1 ist ein Fahrzeugreifen 1 dargestellt, der aus einer mit Cordarmierung 2 und Drahtringen 3 versehenen Lauffläche 4 besteht, die über Reibungsschweißnähte 5 mit den Seitenwänden 6 verbunden ist, welche durch Kernringe 7 verstärkt sind.

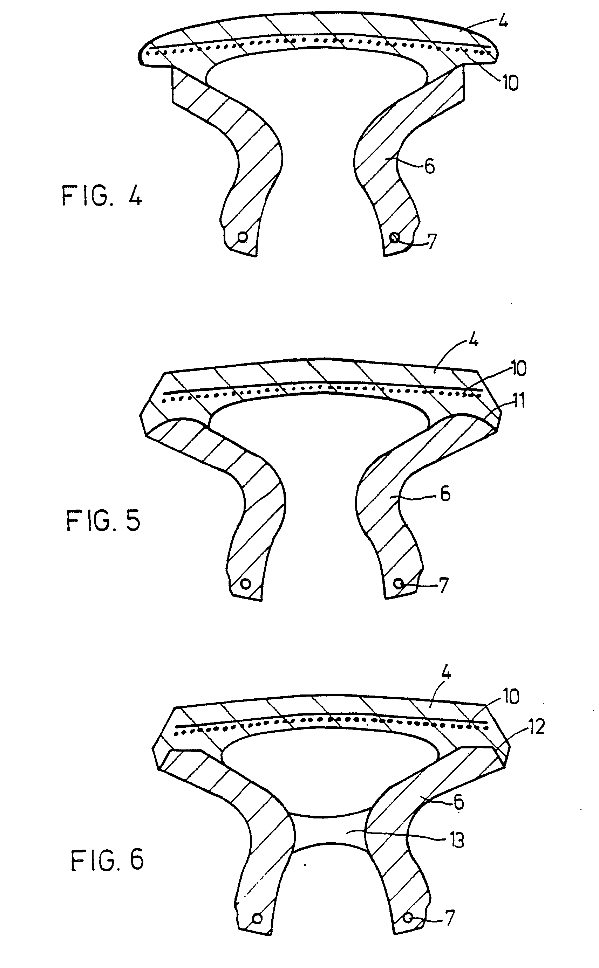

Die Fig. 2 und 3 zeigen einen Fahrzeugreifen 1, bei denen die Lauffläche 4 mit Cordarmierung 2 über umlaufende, im Querschnitt gerade Reibungsschweißnähte 5 mit den beiden Seitenwänden 6 verbunden ist, die wiederum jeweils aus einem dünnen Mantel 9 besteht, der aus Steifigkeitsgründen mit Rippen 8 ausgeführt ist.

In Fig. 4 sind beide Seitenwände 6 mit Kernringen 7 im Anschlußbereich der Lauffläche 4 mit Armierung 10 nach innen versetzt angeordnet.

In Fig. 5 und 6 sind die mit Armierung 10 versehenen Laufflächen 4 durch konkav und konvex 11 bzw. vieleckig 12 geformte Reibungsschweißnähte mit den Seitenwänden 6 verbunden, die durch Kernringe 7 verstärkt sind, wobei sich beide Seitenwände in der Fig. 6 gegenseitig durch Stege 13 abstützen.

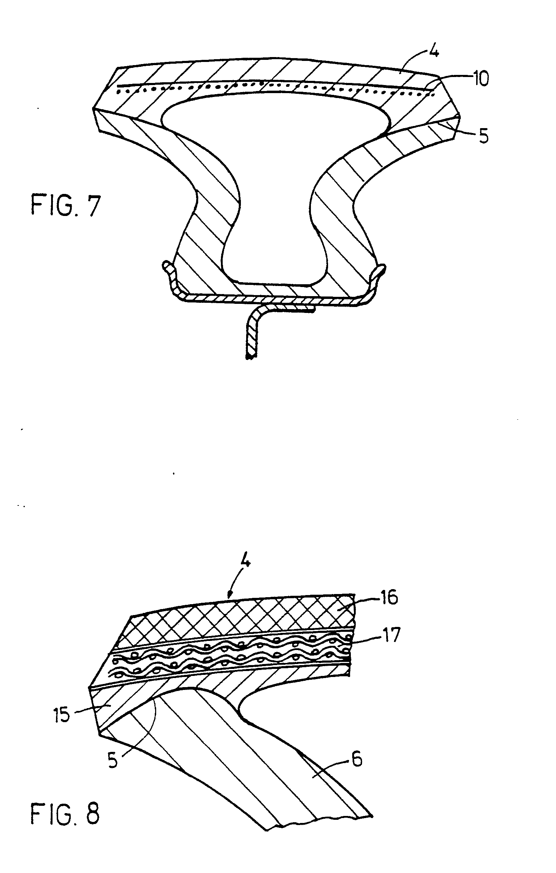

In Abb. 7 sind an die mit Armierung 10 versehene Lauffläche 4 über Reibungsschweißnähte 5 Seitenwände 6 angebracht, die mittels eines durchgehenden Fußes fest miteinander verbunden sind.

In Abb. 8 ist bei der Lauffläche 4 eine gegen PU-Elastomere 15 nicht haftende Kautschukmischung 16 von außen auf das Gewebe 17 aufvulkanisiert, welches vorher im Reaktionsguß und/oder Schaumprozeß mit dem PU-Elastomer festhaftend verbunden wurde. Die Seitenwände 6 sind über ballige Reibungsschweißnähte 5 mit dem Laufstreifen 4 verbunden.

Lauffläche und Seitenwand werden durch Reibungsverschweißung derart zusammengefügt, daß die zusammenzufügenden Teile, z. B. mit einer Drehzahl von 250 U/min, 15 sec. lang aufeinander reiben und unmittelbar nach dem Stillstand noch um mindestens 0,5 mm zusammengedrückt werden.

Bei Reibschweißflächen mit erhabener Form wird die notwendige Vorspannung und Anpreßkraft durch ein Übermaß von mehr als 1 mm im Durchmesser der Seitenwand vorgegeben.

Nicht unerwähnt bleiben soll die Möglichkeit der Herstellung von solchen Laufflächen auf PU-Basis, welche keine Reibungshaftung zu anderen PU-Seitenwandmaterialien aufweisen.

In diesem Falle wird z. B. das nicht reibungsschweißfähige PU-Elastomer als Laufflächenmaterial im Schleuderguß vorgegeben und anschließend ein reibungsschweißfähiges PU-Elastomer als zweites Schleudergut in die Form eingefüllt, welches zum erstgenannten Material haftet und gleichzeitig die Einbettung der Armierung übernimmt. Die Seitenwand kann dann hieran verschweißt werden.

Zum gleichen Ergebnis gelangt man durch die Anwendung eines « Doppelschusses ». Dabei wird im RIM-Prozeß zuerst das nicht reibungsschweißfähige PU-Elastomer als Laufflächenmaterial, eventuell leicht angeschäumt, in die Form eingetragen und bei weiterhin geschlossenem Werkzeug in einem folgenden Schuß, der zeitlich auf die Vernetzung des Laufflächenmaterials abgestimmt ist, ein reibungsschweißfähiges PU-Elastomer auf die Innenfläche der Lauffläche aufgebracht. Dabei wird die Lauffläche komprimiert und man erhält eine reibungsschweißfähige Kontaktschicht von einigen mm Stärke.

**Patentansprüche**

1. Fahrzeugreifen aus Chemiewerkstoffen, vorzugsweise PUR-Elastomeren, bestehend aus einem Verbund von vorgefertigter armierter Lauffläche und weiteren vorgefertigten Bauteilen, dadurch gekennzeichnet, daß als Bauteile konkave Seitenwände (6) verwendet werden, deren nach außen zeigende Enden am inneren Randbereich der Lauffläche (4) durch Reibungsschweißnähte (5, 11, 12) fest mit dieser verbunden sind.

2. Fahrzeugreifen nach Anspruch 1, dadurch gekennzeichnet, daß die Reibungsschweißnaht (5, 11, 12) luftdicht ist.

3. Fahrzeugreifen nach Anspruch 1 oder 2 dadurch gekennzeichnet, daß die Reibungsschweißnaht (5) rotationssymmetrisch mit zur Achse geneigten konischen Flächen ausgebildet ist.

4. Fahrzeugreifen nach Anspruch 1 oder 2 dadurch gekennzeichnet, daß die rotationssymmetrisch ausgebildeten Reibungsschweißnähte (11, 12) in der axialen Ebene kurvenförmig verlaufen.

5. Fahrzeugreifen nach Anspruch 1 bis 4 dadurch gekennzeichnet, daß die Reibungsschweißnaht (5, 11, 12) außen bündig mit Lauffläche (4) und Seitenwand (6) ist.

6. Fahrzeugreifen nach Anspruch 1 bis 4 dadurch gekennzeichnet, daß die Reibungsschweißnaht mindestens teilweise zu dem Rand der Lauffläche (4) versetzt verläuft.

7. Fahrzeugreifen nach Anspruch 1 bis 6 dadurch gekennzeichnet, daß die Lauffläche (4) mit mindestens teilweise untereinander verbundenen Seitenwänden (6) durch die Reibungsschweißnähte (5, 12) verschweißt ist.

8. Fahrzeugreifen nach Anspruch 1 bis 7 dadurch gekennzeichnet, daß durch die Reibungsschweißnaht (5, 11, 12) massive und/oder Integral-schaumartige Polyurethane verbunden sind.

9. Fahrzeugreifen nach Anspruch 1 bis 7 dadurch gekennzeichnet, daß bei der Verbindung durch die Reibungsschweißnaht (5, 11, 12) mindestens ein Bauteil aus einem Thermoplasten besteht.

## Claims

1. Vehicle tyre of synthetic materials, preferably PUR elastomers, consisting of a bond between a prefabricated reinforced tread and other prefabricated components, characterised in that concave sidewalls (6) are used as components, whose ends pointing outwards are firmly bonded by friction weld seams (5, 11, 12) to the tread (4), at the inner peripheral region thereof.

2. Vehicle tyre according to Claim 1, characterised in that the friction weld seam (5, 11, 12) is airtight.

3. Vehicle tyre according to Claim 1 or 2, characterised in that the friction weld seam (5) has a rotationally symmetrical form with conical surfaces inclined towards the axis.

4. Vehicle tyre according to Claim 1 or 2, characterised in that the friction weld seams (11, 12) with a rotationally symmetrical form are curved in the axial plane.

5. Vehicle tyre according to Claim 1 to 4, characterised in that the friction weld seam (5, 11, 12) is externally flush with the tread (4) and the sidewall (6).

6. Vehicle tyre according to Claim 1 to 4, characterised in that the friction weld seam is at least partly displaced in relation to the edge of the tread (4).

7. Vehicle tyre according to Claim 1 to 6, characterised in that the tread (4) is welded by the friction weld seams (5, 12) to sidewalls (6) joined at least partly to each other.

8. Vehicle tyre according to Claim 1 to 7, characterised in that solid and/or integral-foam-type polyurethanes are joined by the friction weld seam (5, 11, 12).

9. Vehicle tyre according to Claim 1 to 7, characterised in that in the bond formed by the friction weld seam (5, 11, 12) at least one component consists of a thermoplast.

## Revendications

1. Pneumatique pour véhicules en matières synthétiques, de préférence en élastomères de polyuréthane, composé d'un assemblage d'une bande de roulement armée préfabriquée et d'autres éléments préfabriqués, caractérisé en ce qu'on utilise comme éléments des flancs concaves (6) dont les extrémités qui regardent vers l'extérieur sont assemblées solidairement à la bande de roulement (4), dans les régions marginales intérieures de celle-ci, par des joints soudés par friction (5, 11, 12).

2. Pneumatique pour véhicules selon la revendication 1, caractérisé en ce que le joint soudé par friction (5, 11, 12) est étanche à l'air.

3. Pneumatique pour véhicules selon la revendication 1 ou la revendication 2, caractérisé en ce que le joint soudé par friction (5) est d'une configuration à symétrie centrale, avec des surfaces coniques inclinées sur l'axe.

4. Pneumatique pour véhicules selon la revendication 1 ou la revendication 2, caractérisé en ce que les joints soudés par friction (11, 12) à symétrie centrale présentent un profil courbe dans le plan axial.

5. Pneumatique pour véhicules selon l'une des revendications 1 à 4, caractérisé en ce que le joint soudé par friction (5, 11, 12) se termine extérieurement à l'affleurement de la bande de roulement (4) et du flanc (6).

6. Pneumatique pour véhicules selon l'une des revendications 1 à 4, caractérisé en ce que le joint soudé par friction est décalé au moins partiellement par rapport au bord de la bande de roulement (4).

7. Pneumatique pour véhicules selon l'une des revendications 1 à 6, caractérisé en ce que la bande de roulement (4) est soudée par les joints soudés par friction (5, 12) à des flancs (6) qui sont au moins partiellement réunis l'un à l'autre.

8. Pneumatique pour véhicules selon l'une des revendications 1 à 7, caractérisé en ce que le joint soudé (5, 11, 12) réunit des polyuréthanes pleins et/ou transformés en une mousse à peau intégrée.

9. Pneumatique pour véhicules selon l'une des revendications 1 à 7, caractérisé en ce que, dans l'assemblage assuré par le joint soudé par friction (5, 11, 12), au moins un élément est composé d'un thermoplaste.

FIG. 1

FIG. 2

FIG. 3

FIG. 4

FIG. 5

FIG. 6

2

FIG. 7

FIG. 8